(19) Europäisches Patentamt
European Patent Office
Office européen des brevets

(11) Veröffentlichungsnummer: **0 021 323**
**B1**

(12) **EUROPÄISCHE PATENTSCHRIFT**

(45) Veröffentlichungstag der Patentschrift: **18.05.83**

(51) Int. Cl.³: **C 08 G 18/08** // (C08G18/08, 18/65, 18/71)

(21) Anmeldenummer: **80103370.5**

(22) Anmeldetag: **18.06.80**

# (54) Verfahren zur Herstellung von Polyurethanharnstoffen.

(30) Priorität: **27.06.79 DE 2925944**

(43) Veröffentlichungstag der Anmeldung: **07.01.81 Patentblatt 81/1**

(45) Bekanntmachung des Hinweises auf die Patenterteilung: **18.05.83 Patentblatt 83/20**

(84) Benannte Vertragsstaaten: **BE DE FR GB IT NL**

(56) Entgegenhaltungen:
**DE-A-2 447 368**
**DE-A-2 549 372**
**DE-B-1 271 978**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Quiring, Bernd, Dr., Albrecht-Haushofer-Strasse 2, D-5090 Leverkusen (DE)**
Erfinder: **Wenzel, Wolfgang, Dr., Peter-Landwehr-Strasse 13, D-5060 Bergisch Gladbach 2 (DE)**
Erfinder: **Niederdellmann, Georg, Dr., Heinestrasse 6, D-4047 Dormagen (DE)**
Erfinder: **Wagner, Hans, Dr., Tizianstrasse 13, D-4047 Dormagen (DE)**
Erfinder: **Goyert, Wilhelm, Dr., Wolfskaul 10, D-5000 Köln 80 (DE)**

**EP 0 021 323 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zur Herstellung von Polyurethanharnstoffen

Die vorliegende Erfindung betrifft ein Verfahren zur Herstellung von Polyurethanharnstoffen in Substanz aus höhermolekularen Polyolen, gegebenenfalls kurzkettigen Glykolen, Diisocyanaten und Wasser als Kettenverlängerer in einem mit Knetelementen bestückten Mehrwellenextruder.

Die Herstellung von Polyurethanharnstoffen aus einem NCO-Präpolymeren und Wasser bei Temperaturen zwischen 70 und 100°C in Substanz in einem Mischer mit niedriger Mischintensität wird in der US-PS Nr. 4049632 beschrieben. Das Verfahren ist jedoch nur sehr beschränkt anwendbar: Die Präpolymeren sind aus difunktionellen Polyestern mit Äquivalentgewichten zwischen 480 und 540 und ausgewählten Diisocyanaten aufzubauen. Damit die Präpolymeren noch handhabbar, d.h. rührbar sind, darf ein bestimmtes NCO/OH-Verhältnis nicht unterschritten werden. Wird andererseits ein bestimmtes NCO/OH-Verhältnis bei der Herstellung des NCO-Präpolymeren überschritten, so entstehen bei der anschliessenden Reaktion mit Wasser inhomogene Produkte. Die Verwendung von Reaktionsschneckenmaschinen wird nicht erwähnt.

In der US-PS Nr. 4055549 werden thermoplastisch verarbeitbare Polyurethane und ihre Herstellung in Substanz aus Toluylendiisocyanat, Polycaprolactondiol, einem niedermolekularen Glykol und Wasser beschrieben. Auch nach der Lehre dieser Patentschrift werden die Verfahrensprodukte bevorzugt diskontinuierlich hergestellt. Bei Anwendung eines kontinuierlichen Extruderverfahrens wird die Reaktion zwischen Toluylendiisocyanat und Wasser schon vor dem Eintragen der Komponenten in den Extruder durchgeführt, um eine $CO_2$-Entwicklung, Schaumbildung und den damit verbundenen Druckaufbau im Extruder zu vermeiden. Ausserdem wird die Reaktion zwischen der Isocyanatkomponente und Wasser bei dem in der US-PS Nr. 4055549 beschriebenen Verfahren ebenfalls bei Temperaturen unter 100°C gestartet, was erfahrungsgemäss zu einer ungünstigen Verteilung von Polyharnstoffhartsegmenten und Polyurethanweichsegmenten im Makromolekül führt.

Es wurde nun überraschend gefunden, dass es im Gegensatz zur Lehre der US-PS Nr. 4055549 möglich ist, unter geeigneten Bedingungen Polyurethanpolyharnstoffe durch Umsetzung von Polyisocyanaten mit Wasser in Extrudern, bevorzugt Mehrwellenextrudern, herzustellen, ohne dass das den Extruder verlassende Polyurethan schaumig ist.

Gegenstand der vorliegenden Erfindung ist deshalb ein Verfahren zur kontinuierlichen Herstellung von Polyurethanharnstoffen durch gegebenenfalls stufenweise Umsetzung von

A) einem oder mehreren Polyisocyanaten,

B) einer oder mehreren Verbindungen mit im Mittel mindestens 1,8 zerewitinoffaktiven Wasserstoffatomen und einem Molekulargewicht zwischen 400 und 10000, vorzugsweise zwischen 450 und 6000, und/oder

A') einem Isocyanatgruppen aufweisenden Vorpolymeren aus den Komponenten A und B mit

C) 0,07 bis 40 Gew.%, bevorzugt 0,1 bis 35, besonders bevorzugt 0,2 bis 30, Gew.%, bezogen auf die Summe der zerewitinoffaktiven Verbindungen B+C+D an Wasser sowie gegebenenfalls

D) weiteren ein oder mehrere zerewitinoffaktiven Wasserstoffatome aufweisenden Verbindungen mit einem Molekulargewicht zwischen 32 und 400, vorzugsweise zwischen 62 und 350, und/oder

E) Monoisocyanaten,

wobei das Äquivalentverhältnis zwischen Komponente B und der Summe der Komponenten C und D zwischen 5:1 und 1:30 liegt, der molare Anteil der Komponente C mindestens 5% der Summe aus C und D ausmacht und das Äquivalentverhältnis zwischen Isocyanatgruppen und zerewitinoffaktiven Wasserstoffatomen einschliesslich Wasser insgesamt unter 1,1:1, vorzugsweise unter 1,05:1, besonders bevorzugt unter 1:1, liegt, in Schneckenmaschinen, welches dadurch gekennzeichnet ist, dass

a) die Umsetzung in einem mit Knetelementen bestückten Mehrwellenextruder mit selbstreinigender Schneckengeometrie, vorzugsweise einem Extruder mit zwei gleichsinnig rotierenden Schneckenwellen stattfindet, wobei vorzugsweise das Reaktionsgemisch die Reaktionsphase, in welcher seine Viskosität zwischen 10 und 100 Pa·s liegt, in einer Schneckenzone mit intensiv mischenden Knetelementen unter Einwirkung einer Knetfrequenz von 1 bis 20 Hz und bei einem Geschwindigkeitsgefälle im radialen Spiel zwischen Kamin und Gehäusewand von mehr als 2000 $s^{-1}$ durchläuft,

b) die Komponente C an einer Stelle in die Schneckenmaschine eindosiert wird, an welcher das Reaktionsgemisch eine Temperatur von 120-280°C, vorzugsweise 170-270°C, aufweist,

c) Druck und Temperatur in den Einzugs- und Reaktionszonen der Schneckenmaschine so aufeinander abgestimmt werden, dass die Komponente C als Gasphase vorliegt, und

d) die Temperatur in der Extrusionszone so eingestellt wird, dass das Extrudat einem Druck von mindestens 10 bar, vorzugsweise 10-30 bar, unterworfen ist.

Bei Einhaltung der erfindungsgemässen Verfahrensbedingungen gelingt es, die Reaktion so zu führen, dass eine homogene Masse erhalten wird, die im Gegensatz zur Lehre der US-PS Nr. 4055549 als blasenfreie Schmelze aus dem Extruder austritt. Es sind auch keine Anzeichen eines übernormalen Druckaufbaus in der Schneckenmaschine zu bemerken.

Als Ausgangsprodukte A zur Durchführung des erfindungsgemässen Verfahrens kommen aliphatische, cycloaliphatische, araliphatische, aromatische und heterocyclische Polyisocyanate, wie sie z.B. von W. Siefken in „Justus Liebigs Annalen der Chemie", 562, S. 75 bis 136, beschrieben werden, beispielsweise solche der Formel

$$Q\ (NCO)_n$$

in der

n = 2-4, vorzugsweise 2, und

Q einen aliphatischen Kohlenwasserstoffrest mit 2 bis 18, vorzugsweise 6 bis 10 C-Atomen,

einen cycloaliphatischen Kohlenwasserstoffrest mit 4 bis 15, vorzugsweise 5 bis 10 C-Atomen,

einen aromatischen Kohlenwasserstoffrest mit 6 bis 15, vorzugsweise 6 bis 13 C-Atomen,

bedeuten, z.B. Äthylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl cyclohexan (DE-AS Nr. 1202785, US-PS Nr. 3401190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethandiisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, am aromatischen Kern durch eine oder mehrere Alkylgruppen mit 1 bis 3 C-Atomen substituiertes 2,4- und 2,6-Toluylendiisocyanat sowie an den aromatischen Kernen durch eine oder mehrere Alkylgruppen mit 1 bis 3 C-Atomen substituiertes 4,4'- und 2,4'-Diisocyanatodiphenylmethan.

Erfindungsgemäss bevorzugt sind aromatische Diisocyanate, insbesondere die gegebenenfalls alkylsubstituierten Toluylen- und Diphenylmethandiisocyanate.

Gegebenenfalls können auch höherfunktionelle Isocyanate wie z.B. Triphenylmethantriisocyanat und Destillationsrückstände aus der Diphenylmethandiisocyanatgewinnung eingesetzt werden, wobei jedoch darauf zu achten ist, dass, wenn die Verfahrensprodukte thermoplastisch oder aus Lösung verarbeitet werden sollen, eine mittlere Funktionalität von 2 nicht wesentlich überschritten wird und Reaktionspartner mit höherer Funktionalität durch Mitverwendung anderer mit einer niedrigen Funktionalität als 2 wieder ausgeglichen werden.

Weitere erfindungsgemäss einzusetzende Ausgangskomponenten B sind Verbindungen mit im Durchschnitt mindestens 1,8 gegenüber Isocyanaten reaktionsfähigen Wasserstoffatomen von einem Molekulargewicht von 400 bis 10000. Hierunter versteht man neben Aminogruppen, Thiolgruppen oder Carboxylgruppen aufweisenden Verbindungen, vorzugsweise Hydroxylgruppen aufweisende Verbindungen, insbesondere 2 bis 8 Hydroxylgruppen aufweisende Verbindungen, speziell solche vom Molekulargewicht 450 bis 6000, vorzugsweise 600 bis 4500, z.B. mindestens 2, in der Regel 2 bis 8, vorzugsweise aber 2 bis 4, Hydroxylgruppen aufweisende Polyester, Polyäther, Polythioäther, Polyacetale, Polycarbonate und Polyesteramide, wie sie für die Herstellung von homogenen und von zellförmigen Polyurethanen an sich bekannt sind:

Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phtalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäurebisglykolester. Als mehrwertige Alkohole kommen z.B. Äthylenglykol, Propylenglykol-(1,2) und -(1,3), Butylenglykol-(1,4) und -(2,3), Hexandiol-(1,6), Octandiol-(1,8), Neopentylglykol, 1,4-Bishydroxymethylcyclohexan, 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Formit, Methylglykosid, ferner Diäthylenglykol, Triäthylenglykol, Tetraäthylenglykol und höhere Polyäthylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar.

Auch die erfindungsgemäss in Frage kommenden, mindestens zwei, in der Regel zwei bis acht, vorzugsweise zwei bis drei, Hydroxylgruppen aufweisenden Polyäther sind solche der an sich bekannten Art und werden z.B. durch Polymerisation von Epoxiden wie Äthylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Äthylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Äthylenglykol, Propylenglykol-(1,3) oder -(1,2), Trimethylolpropan, Glycerin, Sorbit, 4,4'-Dihydroxydiphenylpropan, Anilin, Äthanolamin oder Äthylendiamin hergestellt. Auch Sucrosepolyäther, wie sie z.B. in den DE-AS Nrn. 1176358 und 1064938 beschrieben werden, sowie auf Formit oder Formose gestartete Polyäther (DE-OS Nr. 2639083 bzw. Nr. 2737951), kommen erfindungsgemäss in Frage. Vielfach sind solche Polyäther bevorzugt, die überwiegend (bis zu 90 Gew.%, bezogen auf alle vorhandenen OH-Gruppen im Polyäther) primäre OH-Gruppen aufweisen. Auch OH-Gruppen aufweisende Polybutadiene sind erfindungsgemäss geeignet.

Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten, z.B. um Polythiomischäther, Polythioätherester oder Polythioätheresteramide.

Als Polyacetale kommen z.B. die aus Glykolen, wie Diäthylenglykol, Triäthylenglykol, 4,4'-Dioxäthoxydiphenyldimethylmethan, Hexandiol und Formaldehyd herstellbaren Verbindungen in Frage. Auch durch Polymerisation cyclischer Acetale wie z.B. Trioxan (DE-OS Nr. 1694128) lassen sich erfindungsgemäss geeignete Polyacetale herstellen.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diäthylenglykol, Triäthylenglykol, Tetraäthylenglykol oder Thiodiglykol mit Diarylcarbonaten, z.B. Diphenylcarbonat, oder Phosgen hergestellt werden können (DE-AS Nrn. 1694080, 1915908 und 2221751; DE-OS Nr. 2605024).

Zu den Polyesteramiden und Polyamiden zählen z.B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

Auch bereits Urethan- oder Harnstoffgruppen enthaltende Polyhydroxylverbindungen sowie gegebenenfalls modifizierte natürliche Polyole, wie Rizinusöl oder Kohlenhydrate, z.B. Stärke, sind verwendbar. Auch Anlagerungsprodukte von Alkylenoxiden an Phenolformaldehydharze oder auch an Harnstofformaldehydharze sind erfindungsgemäss einsetzbar.

Die genannten Polyhydroxylverbindungen können vor ihrer Verwendung im Polyisocyanatpolyadditionsverfahren noch in der verschiedensten Weise modifiziert werden: So lässt sich gemäss DE-OS Nr. 2210839 (US-PS Nr. 3849515) und Nr. 2544195 ein Gemisch aus verschiedenen Polyhydroxylverbindungen (z.B. aus einem Polyäther- und einem Polyesterpolyol) durch Verätherung in Gegenwart einer starken Säure zu einem höhermolekularen Polyol kondensieren, welches aus über Ätherbrücken verbundenen verschiedenen Segmenten aufgebaut ist. Es ist auch möglich, z.B. gemäss DE-OS Nr. 2559372 in die Polyhydroxylverbindungen Amidgruppen oder gemäss DE-OS Nr. 2620487 durch Umsetzung mit polyfunktionellen Cyansäureestern Triazingruppen einzuführen. Durch Umsetzung eines Polyols mit einer weniger als äquivalenten Menge eines Diisocyanatocarbodiimids und anschliessende Reaktion der Carbodiimidgruppe mit einem Amin, Amid, Phosphit oder einer Carbonsäure erhält man Guanidin-, Phosphonoformamidin- bzw. Acylharnstoffgruppen aufweisende Polyhydroxylverbindungen (DE-OS Nrn. 2714289, 2714292 und 2714293). Von besonderem Interesse ist es in manchen Fällen, die höhermolekularen Polyhydroxylverbindungen durch Reaktion mit Isatosäureanhydrid vollständig oder teilweise in die entsprechenden Anthranilsäureester überzuführen, wie es in den DE-OS Nrn. 2019432 und 2619840 bzw. den US-PS Nrn. 3808250, 3975428 und 4016143 beschrieben ist. Man erhält auf diese Weise höhermolekulare Verbindungen mit endständigen aromatischen Aminogruppen.

Durch Umsetzung von NCO-Präpolymeren mit Hydroxylgruppen aufweisenden Enaminen, Aldiminen oder Ketiminen und anschliessende Hydrolyse erhält man gemäss DE-OS Nr. 2546536 bzw. US-PS Nr. 3865791 höhermolekulare, endständige Aminogruppen aufweisende Verbindungen. Weitere Herstellungsverfahren für höhermolekulare Verbindungen mit endständigen Aminogruppen oder Hydrazidgruppen werden in der DE-OS Nr. 1694152 (US-PS Nr. 3625871) beschrieben.

Erfindungsgemäss können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) *in situ* in den oben genannten, Hydroxylgruppen aufweisenden Verbindungen ablaufen lässt. Derartige Verfahren sind beispielsweise in den DE-AS Nrn. 1168075 und 1260142 sowie den DE-OS Nrn. 2324134, 2423984, 2512385, 2513815, 2550796, 2550797, 2550833, 2550862, 2633293 und 2639254 beschrieben. Es ist aber auch möglich, gemäss US-PS Nr. 3869413 bzw. DE-OS Nr. 2550860 eine fertige wässerige Polymerdispersion mit einer Polyhydroxylverbindung zu vermischen und anschliessend aus dem Gemisch das Wasser zu entfernen.

Auch durch Vinylpolymerisate modifizierte Polyhydroxyverbindungen, wie sie z.B. durch Polymerisation von Styrol und Acrylnitril in Gegenwart von Polyäthern (US-PS Nrn. 3383351, 3304273, 3523093, 3110695; DE-AS

Nr. 1152536) oder Polycarbonatpolyolen (DE-PS Nr. 1769795; US-PS Nr. 3637909) erhalten werden, sind für das erfindungsgemässe Verfahren geeignet. Bei Verwendung von Polyätherpolyolen, welche gemäss den DE-OS Nrn. 2442101, 2644922 und 2646141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit. Polyhydroxylverbindungen, in welche durch radikalische Pfropfpolymerisation mittels ungesättigter Carbonsäuren sowie gegebenenfalls weiterer olefinisch ungesättigter Monomerer Carboxylgruppen eingeführt wurden (DE-OS Nrn. 2714291, 2739620 und 2654746) können mit besonderem Vorteil in Kombination mit mineralischen Füllstoffen eingesetzt werden.

Bei der Verwendung von modifizierten Polyhydroxylverbindungen der oben genannten Art als Ausgangskomponente im Polyisocyanatpolyadditionsverfahren entstehen in vielen Fällen Polyurethankunststoffe mit wesentlich verbesserten mechanischen Eigenschaften.

Vertreter der genannten erfindungsgemäss zu verwendenden Verbindungen sind z.B. in „High Polymers", vol. XVI, „Polyurethanes, Chemistry and Technology", verfasst von Saunders-Frisch, Interscience Publishers, New York, London, Bd. I, 1962, S. 32-42 und S. 44-54 und Bd. II, 1964, S. 5-6 und 198-199 sowie im „Kunststoff-Handbuch", Bd. VII, Vieweg-Höchtlen, Carl-Hanser-Verlag, München, 1966, z.B. auf den Seiten 45-71, beschrieben. Selbstverständlich können Mischungen der oben genannten Verbindungen mit mindestens 1,8 gegenüber Isocyanaten reaktionsfähigen Wasserstoffatomen mit einem Molekulargewicht von 400 bis 10 000, z.B. Mischungen von Polyäthern und Polyestern, eingesetzt werden.

Von besonderem Vorteil ist es dabei in manchen Fällen, niedrigschmelzende und hochschmelzende Polyhydroxylverbindungen miteinander zu kombinieren (DE-OS Nr. 2706297).

Gegebenenfalls erfindungsgemäss einzusetzende Ausgangskomponenten D sind z.B. Verbindungen mit mindestens 2 gegenüber Isocyanaten reaktionsfähigen Wasserstoffatomen und einem Molekulargewicht von 32 bis 400. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens 2 gegenüber Isocyanaten reaktionsfähigen Wasserstoffatomen mit einem Molekulargewicht von 32 bis 400 verwendet werden.

Als Beispiele für derartige Verbindungen seien genannt:

Äthylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bishydroxymethylcyclohexan, 2-Methyl-1,3-propandiol, Dibrombutendiol (US-PS Nr. 3723392), Glyzerin, Trimethylolpropan, Hexantriol-(1,2,6), Trimethyloläthan, Pentaerythrit, Chinit, Mannit und Sorbit, Rizinusöl, Diäthylenglykol, Triäthylenglykol, Tetraäthylenglykol, höhere Polyäthylenglykole mit einem Molekulargewicht bis 400, Dipropylenglykol, höhere Polypropylenglykole mit einem Molekulargewicht bis 400, Dibutylenglykol, höhere Polybutylenglykole mit einem Molekulargewicht bis 400, 4,4'-Dihydroxydiphenylpropan, Hydrochinondihydroxyäthyläther, Äthanolamin, Diäthanolamin, N-Methyldiäthanolamin, Triäthanolamin und 3-Aminopropanol.

Als niedermolekulare Polyole kommen erfindungsgemäss auch die Gemische von Hydroxyaldehyden und Hydroxyketonen (Formose) bzw. die hieraus durch Reduktion erhaltenen mehrwertigen Alkohole (Formit) in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-OS Nrn. 2639084, 2714084, 2714104, 2721186, 273854 und 2738512). Um Kunststoffe mit verbesserter Flammwidrigkeit zu erhalten, setzt man diese Formosen mit Vorteil in Kombination mit Aminoplastbildnern und/oder Phosphiten ein (DE-OS Nrn. 2738513 und 2738532). Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen erfindungsgemäss als Polyolkomponente in Betracht (DE-OS Nr. 2638759).

Erfindungsgemäss geeignete aliphatische Diamine sind beispielsweise Äthylendiamin, 1,4-Tetramethylendiamin, 1,11-Undecamethylendiamin, 1,12-Dodecamethylendiamin sowie deren Gemische, 1-Amino-3,3,5-trimethyl-5-aminomethylcyclohexan (Isophorondiamin), 2,4- und 2,6-Hexahydrotoluylendiamin sowie deren Gemische, Perhydro-2,4'- und- 4,4'-diaminodiphenylmethan, p-Xylylendiamin, Bis-(3-aminopropyl)-methylamin, Diaminoperhydroanthrazene (DE-OS Nr. 2638731) und cycloaliphatische Triamine gemäss DE-OS Nr. 2614244. Auch Hydrazin und substituierte Hydrazine, z.B. Methylhydrazin, N,N'-Dimethylhydrazin und deren Homologe sowie Säuredihydrazide kommen erfindungsgemäss in Betracht, z.B. Carbodihydrazid, Oxalsäuredihydrazid, die Dihydrazide von Malonsäure, Bernsteinsäure, Glutarsäure, Adipinsäure, β-Methyladipinsäure, Sebazinsäure, Hydracrylsäure und Terephthalsäure; Semicarbazidoalkylenhydrazide wie z.B. β-Semicarbazidopropionsäurehydrazid (DE-OS Nr. 1770591), Semicarbazidoalkylencarbazinester wie z.B. 2-Semicarbazidoäthylcarbazinester (DE-OS Nr. 1918504) oder auch Aminosemicarbazidverbindungen wie z.B. β-Aminoäthylsemicarbazidocarbonat (DE-OS Nr. 1902931). Zur Steuerung ihrer Reaktivität können die Aminogruppen ganz oder teilweise durch Aldimin- bzw. Ketimingruppen blockiert sein (US-PS Nr. 3734894; DE-OS Nr. 2637115).

Als Beispiele für aromatische Diamine seien Bisanthranilsäureester gemäss den DE-OS Nrn. 2040644 und 2160590, 3,5- und 2,4-Diaminobenzoesäureester gemäss DE-OS Nr. 2025900 die in den DE-OS Nrn. 1803635 (US-PS Nrn. 3681290 und 3736350), 2040650 und 2160589 beschriebenen estergruppenhaltigen Diamine, die Äthergruppen aufweisenden Diamine gemäss DE-OS Nrn. 1770525 und 1809172 (US-PS Nrn. 3654364 und 3736295), gegebenenfalls in 5-Stellung substituierte 2-Halogen-1,3-phenylendiamine (DE-OS Nrn. 2001772, 2025896 und 2065869), 3,3'-Dichlor-4,4'-diaminodiphenylmethan, Toluylendiamin, 4,4'-Diaminodiphenylmethan, 4,4'-Diaminodiphenyldisulfide (DE-OS Nr. 2404976), Diaminodiphenyldithioäther (DE-OS Nr. 2509404), durch Alkylthiogruppen substituierte aromatische Diamine (DE-OS Nr. 2638760), Diaminobenzolphosphonsäureester (DE-OS Nr. 2459491), Sulfonat- oder Carboxylatgruppen enthaltende aromatische Diamine (DE-OS Nr. 2720166) sowie die in der DE-OS Nr. 2635400 aufgeführten hochschmelzenden Diamine genannt. Beispiele für aliphatisch-aromatische Diamine sind die Aminoalkylthioaniline gemäss DE-OS Nr. 2734574.

Als Kettenverlängerungsmittel können erfindungsgemäss auch Verbindungen wie 1-Mercapto-3-aminopropan, gegebenenfalls substituierte Aminosäuren, z.B. Glycin, Alanin, Valin, Serin und Lysin sowie gegebenenfalls substituierte Dicarbonsäuren, beispielsweise Bernsteinsäure, Adipinsäure, Phthalsäure, 4-Hydroxyphthalsäure und 4-Aminophthalsäure verwendet werden.

Ferner können gegenüber Isocyanaten monofunktionelle Verbindungen in Anteilen von 0,01 bis 10 Gew.%, bezogen auf Polyurethanfeststoff, als sogenannte Kettenabbrecher mitverwendet werden. Derartige monofunktionelle Verbindungen sind z.B. Monoamine wie Butyl- und Dibutylamin, Octylamin, Stearylamin, N-Methylstearylamin, Pyrrolidin, Piperidin und Cyclohexylamin, Monoalkohole wie Butanol, 2-Äthylhexanol, Octanol, Dodecanol, die verschiedenen Amylalkohole, Cyclohexanol, Äthylenglykolmonoäthyläther.

Weitere erfindungsgemäss geeignete niedermolekulare Polyole vom Molekulargewicht bis 400 sind Esterdiole der allgemeinen Formeln

$$HO-(CH_2)_y-CO-O-(CH_2)_x-OH, \text{ und}$$
$$HO-(CH_2)_xO-CO-R-CO-O-(CH_2)_x-OH$$

in denen

R einen Alkylenrest mit 1 bis 10, vorzugsweise 2 bis 6, C-Atomen bzw. einen Cycloalkylen- oder Arylenrest mit 6 bis 10 C-Atomen,

x = 2 bis 6, und

y = 3 bis 5

bedeuten,

z.B. δ-Hydroxybutyl-ε-hydroxycapronsäureester, ω-Hydroxyhexyl-γ-hydroxybuttersäureester, Adipinsäurebis-(β-hydroxyäthyl)ester und Terephthalsäurebis-(β-hydroxyäthyl)ester;

Diolurethane der allgemeinen Formel

$$HO-(CH_2)_x-O-CO-NH-R'-NH-CO-O-(CH_2)_x-OH$$

in der

R' einen Alkylenrest mit 2 bis 15, vorzugsweise 2 bis 6, C-Atomen oder einen Cycloalkylen- oder Arylenrest mit 6 bis 15 C-Atomen, und

x eine Zahl zwischen 2 und 6

darstellen,

z.B. 1,6-Hexamethylenbis-(β-hydroxyäthylurethan) oder 4,4'-Diphenylmethanbis-(δ-hydroxybutylurethan);

sowie Diolharnstoffe der allgemeinen Formel

$$HO-(CH_2)_x-\underset{\displaystyle R'''}{\underset{|}{N}}-CO-NH-R''-NH-CO-\underset{\displaystyle R'''}{\underset{|}{N}}-(CH_2)_x-OH$$

in der

R'' einen Alkylenrest mit 2 bis 15, vorzugsweise 2 bis 9, C-Atomen oder einen Cycloalkylen- oder Arylenrest mit 6 bis 15 C-Atomen,

R''' Wasserstoff oder eine Methylgruppe, und

x die Zahlen 2 oder 3

bedeuten,

z.B. 4,4'-Diphenylmethanbis-(β-hydroxyäthylharnstoff) oder die Verbindung

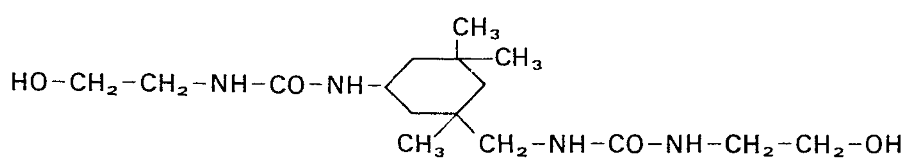

Für manche Zwecke ist es vorteilhaft, Polyole einzusetzen, welche Sulfonat- und/oder Phosphonatgruppen enthalten (DE-OS Nr. 2719372), vorzugsweise das Addukt von Bisulfit an Butendiol-1,4 bzw. dessen Alkoxylierungsprodukte.

Bei der Auswahl der Komponenten B und D ist — ähnlich wie bei der Polyisocyanatkomponente A — darauf zu achten, dass die mittlere Funktionalität der Reaktionspartner 2 nicht wesentlich überschreitet, wenn thermoplastisch verarbeitbare Endprodukte hergestellt werden sollen. Höherfunktionelle Verbindungen sollten daher durch Mitverwendung der genannten monofunktionellen Ausgangskomponente kompensiert werden.

Geeignete Monoisocyanate E sind z.B. Stearylisocyanat, Cyclohexylisocyanat, Chlorhexylisocyanat und Phenylisocyanat.

Erfindungsgemäss bevorzugte Kettenverlängerungsmittel D sind Äthylenglykol, Diäthylenglykol, Butandiol-1,4, Hexandiol-1,6, Octandiol-1,8, Dimethylolcyclohexan sowie der Hydrochinondihydroxyäthyläther. Besonders bevorzugt sind Butandiol und Hexandiol-1,6.

Das Wasser C kann erfindungsgemäss auch in Form von Kristallwasser oder adsorptiv gebunden in die Reaktion eingebracht werden.

Für das erfindungsgemässe Verfahren kommen die an sich bekannten mehrwelligen Schneckenmaschinen mit selbstreinigender Schneckengeometrie in Betracht, insbesondere Doppelwellenextruder mit gleichsinnig rotierenden Schnekkenwellen, wie sie z.B. in den DE-OS Nrn. 2302564 und 2423764 (US-PS Nr. 3963679) und der dort zitierten Literatur beschrieben werden. Erfindungsgemäss sind die Schneckenmaschinen mit an sich bekannten Knetelementen bestückt, wie sie ebenfalls z.B. in den DE-OS Nrn. 2302564 und 2423764 näher beschrieben sind.

Sinnvollerweise setzt man Extruder ein, die aus mehreren getrennt heiz- bzw. kühlbaren Gehäuseteilen aufgebaut und nach Einzugszonen (Zudosierung der Reaktionskomponenten), Reaktionszonen und Extrusionszone gegliedert sind. Die Knetelemente werden vorzugsweise mindestens an jenen Stellen der Reaktionszonen angeordnet, in welchen das Reaktionsgemisch die in den DE-OS Nrn. 2302564 und 2423764 näher erläuterte kritische, klebrige Phase mit einer Viskosität von ca. 10 bis 100 Pa·s durchläuft. Durch diese Massnahme wird eine besonders gute Homogenität der Verfahrensprodukte erreicht.

Bei der Durchführung des erfindungsgemässen Verfahrens werden entweder alle Komponenten A bis E einzeln oder teilweise vorvermischt an der gleichen Stelle (bevorzugt in das erste Gehäuse) oder an verschiedenen Stellen kontinuierlich in die Schneckenknetpresse eingespeist. So ist es beispielsweise oft sinnvoll, die Komponenten A und B am Anfang der Schnecke und die Kettenverlängerer C und D in die Mitte des Extruders einzuspeisen. Nach einer besonders bevorzugten Verfahrensvariante werden die Komponenten A, B und gegebenenfalls D und E am Anfang des Extruders, das Wasser an einer späteren Stelle in die Schneckenmaschine dosiert.

Gemäss einer besonderen Ausführungsform des erfindungsgemässen Verfahrens kann man auch die Reaktion in der Anfangsphase in einem Mehrwellen-, und dann (nach Ablauf der kritischen Phase) in einem dahintergeschalteten Einwellenextruder ablaufen lassen.

Die Polyisocyanatpolyadditionsreaktion wird erfindungsgemäss bei Temperaturen zwischen 80 und 300° C, vorzugsweise zwischen 100 und 290° C, durchgeführt.

Erfindungswesentlich ist dabei, dass die Temperatur des Reaktionsgemisches in jener Einzugszone, in welcher das Wasser zudosiert wird, und in jener Reaktionszone, in welcher das Wasser mit dem Polyisocyanat unter Kettenverlängerung reagiert, oberhalb des Siedepunkts des Wassers (unter dem im Extruder jeweils herrschenden Druck) liegt, so dass das Wasser als Dampfphase vorliegt. Dies wird erreicht, indem man Heizung bzw. Kühlung an den entsprechenden Gehäusezonen so reguliert, dass die Temperatur zwischen ca. 120 und 280° C, vorzugsweise 170 bis 270° C, liegt.

Im Gegensatz dazu wird am Schneckenende so weit abgekühlt, dass sich an der Düse im Extrudat ein Druck von mindestens 10 bar, vorzugsweise 10 bis 30 bar, aufbaut. Hierdurch wird vermieden, dass der Wasserdampf zusammen mit dem Extrudat entweicht.

In einer bevorzugten Ausführungsform des erfindungsgemässen Verfahrens ist der Extruder mit einem oder mehreren, bevorzugt ein bis zwei, handelsüblichen Ausdampfgehäusen ausgerüstet, durch die Gase wie $CO_2$ und Wasserdampf entweichen können oder abgesaugt werden. Die Entgasungsgehäuse können in Förderrichtung gesehen vor und/oder hinter der Einspeisestelle des Wassers eingebaut sein. Um ein Schäumen zu vermeiden, kann die Entgasung auch unter Überdruck durchgeführt werden.

Zweckmässigerweise werden die Entgasungsgehäuse nicht zu nahe an den Einzugszonen und auch nicht direkt an der Extrusionszone (da sonst das unter Druck stehende Extrudat in das Entgasungsgehäuse eindringen würde) angeordnet.

Die erfindungsgemäss einzusetzende Wassermenge beträgt bevorzugt mindestens 100% der Theorie. Gegebenenfalls kann es aber auch sinnvoll sein, 800 oder gar über 5000% der theoretisch (aus dem Überschuss an NCO-Gruppen gegenüber den zerewitinoffaktiven H-Atomen von Komponenten B und D) berechneten Wassermenge einzusetzen.

Die Polyisocyanatpolyadditionsreaktion kann erfindungsgemäss gegebenenfalls auch mit den üblichen aus der Polyurethanchemie bekannten Katalysatoren beschleunigt werden. Solche Katalysatoren sind beispielsweise tert.- Amine, andere Basen wie Tetraalkylammoniumhydroxyde, Natriumhydroxid, -phenolat usw. und organische Metallverbindungen. Erfindungsgemäss zu verwendende Katalysatoren sind z.B. im „Kunststoff-Handbuch", Bd. VII, herausgegeben von Vieweg und Höchtlen, Carl-Hanser-Verlag, München, 1966, z.B. auf den Seiten 96 bis 102, beschrieben.

Die erfindungsgemässe Umsetzung kann auch in Gegenwart von Gleitmitteln, Farbstoffen, Pigmenten und anderen Zuschlagstoffen wie Füll- und Verstärkungsmitteln, z.B. auch anderen Thermoplasten und Fasern (z.B. Glasfasern) durchgeführt werden. Es ist auch möglich, obwohl das für die Durchführung des erfindungsgemässen Verfahrens nicht notwendig ist, die Reaktion in Gegenwart von gegenüber Isocyanatgruppen indifferenten Lösungsmitteln wie z.B. Estern, Äthern, Kohlenwasserstoffen, Ketonen, Halogenkohlenwasserstoffen oder peralkylierten Säureamiden ablaufen zu lassen.

Das erfindungsgemässe Verfahren ermöglicht eine wesentliche Vereinfachung der kontinuierlichen Herstellung von Polyurethanen. Bei der kontinuierlichen Herstellung von löslichen und/oder thermoplastischen Polyurethanen müssen in der Praxis Schwankungen in der Förderung der Dosierpumpen von 1% und mehr unbedingt vermieden werden, da andernfalls Produkte mit stark unterschiedlichen Molekulargewichten entstehen. Wird jedoch bei Anwendung des erfindungsgemässen Verfahrens das Äquivalentverhältnis des Polyisocyanats A zur Summe aus B und gegebenenfalls D etwas grösser als 1 gewählt und Wasser im Überschuss verwendet, so ist auch bei grossen Förderungschwankungen einzelner Dosierpumpen im Reaktionsprodukt stets das Äquivalentverhältnis von umgesetzten NCO- und zerewitinoffaktiven Gruppen gleich (1:1), so dass ein Produkt mit praktisch konstantem Molekulargewicht entsteht. Durch die Dosierschwankungen wird dann nur das Verhältnis von Harnstoff- und Urethangruppen verändert, das innerhalb gewisser Grenzen auf die Eigenschaften der Produkte praktisch ohne Einfluss ist.

Es ist überraschend, dass bei den im erfindungsgemässen Verfahren angewendeten Temperaturen von zum Teil weit über 100° C die freien Isocyanatgruppen praktisch quantitativ mit Wasser in der Schneckenmaschine unter Kettenverlängerung reagieren, obwohl diese Temperaturen ausreichen, um Polyurethane unter ähnlichen Bedingungen praktisch quantitativ zu hydrolysieren (siehe DE-OS Nr. 2442387 = US-PS Nr. 4051212). Auch in Gegenwart von überschüssigem Wasser tritt erfindungsgemäss überraschenderweise praktisch keine Spaltung von Urethan- oder Estergruppen ein.

Werden die erfindungsgemässen Verfahrensbedingungen nicht eingehalten, so entstehen weniger homogene Produkte, die Gelteilchen enthalten, bei gleicher Rezeptur trüber sind und eine geringere Löslichkeit haben.

Die aus dem Extruder austretende Produktschmelze wird auf an sich bekannte Weise abgekühlt und zerkleinert.

Die Verfahrensprodukte können aus Lösung oder thermoplastisch weiterverarbeitet werden. Platten, Folien usw. können z.B. auch beim Austritt aus dem Reaktionsextruder durch eine geeignete Düse geformt werden.

Die Verfahrensprodukte haben ein hohes mechanisches Eigenschaftsniveau, vor allem hinsichtlich ihrer Festigkeit. Sie finden Verwendung für elastische Überzüge, z.B. für Textilien, als Folien für Maschinenteile (Zahnräder, Buchsen, Kabelmäntel, Schläuche, Dichtungen, Lagerschalen oder Karosserieteile), Teile von Schuhen usw. Diese Verwendungsmöglichkeiten der Verfahrensprodukte sind an sich bekannt.

Die in den folgenden Beispielen angegebenen Zahlenwerte sind, wenn nicht anders vermerkt, als Gewichtsteile bzw. Gewichtsprozente zu verstehen.

In den Beispielen wurde eine zweiwellige, gleichsinnig rotierende, selbstreinigende Schneckenmaschine des Typs ZSK 53 der Firma Werner & Pfleiderer mit den folgenden Dimensionen verwendet:

Wellendurchmesser D = 53 mm; Länge der Welle = 41 D; Länge der Knetzonen: 90-300 mm; Radialspiel: ca. 0,1 mm.

Der Extruder war aus 12 Gehäusezonen aufgebaut. Die erste Einzugszone befand sich in der 1. Gehäusezone, die zweite Einzugszone am Ende des 5. Gehäuses. Die Knetelemente hatten einen etwa dreieckigen Querschnitt und waren im 4., 7., 8. und 10. Gehäuse angeordnet; das 7. Gehäuse war als Entgasungsgehäuse ausgebildet.

Die Temperaturführung in den Beispielen ist der folgenden Tabelle zu entnehmen.

*Gehäusetemperatur (°C)*

| Beispiel Gehäuse | 1 | 2 | 3 | 4 | 5 | 6 | 7 | 8 | 9 | 10 | 11 | 12 | Düsenplatte |
|---|---|---|---|---|---|---|---|---|---|---|---|---|---|
| 1 | | 190 | | 240 | 230 | 210 | | 170 | 140 | 140 | 120 | | 185-225 |
| 2 | | 200 | | 240 | | 260 | | 210 | | 150 | | 140 | 180 |
| 3 | | 200 | | 235 | 235 | 215 | | 170 | 140 | 140 | 120 | 75 | 225 |
| 4 | | 190 | | 245 | 240 | 230 | | 180 | 195 | 195 | 165 | 140 | 210 |
| 5, 6 | | 160 | | 200 | 145 | 145 | 200 | 175 | | 150 | 130 | 165 | 225 |
| 7, 8 | | 200 | | 240 | 250 | 240 | | 200 | 165 | 165 | 80 | 75 | 225 |
| 9 | | 200 | | 240 | | 240 | | 200 | 155 | 160 | 140 | 90 | 200-225 |
| 10, 11 | | 150 | | 210 | 230 | 215 | | 200 | 150 | 140 | 90 | 70 | 200 |
| 12 | | 240 | | 220 | | 240 | | 220 | | 165 | 100 | 65 | 210 |
| 13 | | 80 | | 220 | 230 | 215 | | 190 | 155 | 140 | 90 | 70 | 225 |
| 14 | | 100 | | 240 | 225 | 225 | | 180 | | 140 | | 80 | 210 |
| 15 | | 80 | | 120 | 200 | 240 | | 220 | | 180 | 100 | 60 | 200 |
| 16 | 100 | 200 | 200 | 200 | 200 | 220 | 220 | 190 | 190 | 170 | 170 | 170 | 230 |

*Beispiel 1*

In den Einspeisetrichter im ersten Schneckengehäuse werden kontinuierlich je Zeiteinheit dosiert:

1. 200 Teile einer auf 70° C erwärmten Mischung aus 100 Teilen eines Polybutandioladipats mit einer Hydroxylzahl von 52 und einer Säurezahl von 0,7, 15 Teilen Butandiol-(1,4), 1,2 Teilen

Äthylenbisstearylamid und 0,4 Teilen 2,6-Ditert.-butyl-4-methylphenol,

2. a) 100 Teile technisches 4,4'-Diisocyanatodiphenylmethan,

b) 122,5 Teile technisches 4,4'-Diisocyanatodiphenylmethan,

c) 143,5 Teile technisches 4,4'-Diisocyanatodiphenylmethan,

d) 164 Teile technisches 4,4'-Diisocyanatodiphenylmethan,

das auf 50° C gehalten wird.

In das 5. Gehäuse des Extruders werden

3. a) 15 Teile Wasser (äquivalente Menge: 0,6 Teile),

b) 10 Teile Wasser (äquivalente Menge: 2,1 Teile),

c) 6 Teile Wasser (äquivalente Menge: 3,7 Teile),

d) 9 Teile Wasser (äquivalente Menge: 5,1 Teile),

kontinuierlich eingespeist.

Die Wellendrehzahl wird von 250 bis 300 $min^{-1}$ variiert.

An dem Produkt wird die Schmelzviskosität nach verschiedenen Verweilzeiten (5, 10, 15 und 20 min) in einem Hochdruckkapillarviskosimeter HKV 2000 (Herstellerfirma Göttfert, Buchen/Odenwald) in einem auf 210° C erhitzten Zylinder bestimmt. Durch Extrapolation auf die Verweilzeit 0 wird der Grenzschmelzindex (intrinsic melt index, IMI) ermittelt. Der Schmelzindex ist die unter einem Druck von 2,45 bar durch eine Kapillare (L/D=15) geflossene Menge in Gramm, umgerechnet auf eine Auslaufzeit von 10 min. Folgende IMI's werden gemessen:

a) 40 g/10 min,
b) 170 g/10 min,
c) 180 g/10 min, und
d) 140 g/10 min.

Alle Produkte ergeben in einer Mischung aus Dimethylformamid/Methyläthylketon (4:1) klare, lagerstabile, hochviskose Lösungen.

*Beispiel 2 (Vergleichsversuch)*

Es wird wie im Beispiel 1 verfahren, jedoch wird anstatt eines erfindungsgemässen ein Wellenbesatz, der nur aus Gewindeelementen besteht, eingesetzt.

In den Extruder werden wie im Beispiel 1 kontinuierlich

1. 200 Teile des im Beispiel 1 beschriebenen Polyolgemisches,

2. a) 130,4 Teile Diisocyanatodiphenylmethan,

b) 153 Teile Diisocyanatodiphenylmethan, und

3. a) 2,4 Teile Wasser,

b) 4 Teile Wasser,

eindosiert.

Die Wellendrehzahl beträgt 300 $min^{-1}$. Die aus dem Extruder austretende Produktschmelze ist stark trübe. Die Lösungen der Produkte in der Mischung aus Dimethylformamid/Methyläthylketon (4:1) verpasten, noch ehe die Produkte vollständig gelöst sind.

*Beispiel 3*

Man verfährt wie im Beispiel 1 und dosiert kontinuierlich in die Schneckenmaschine:

1. a) 300 Teile eines Polyolgemisches aus 100 Teilen des im Beispiel 1 beschriebenen Polyadipats, 1,2 Teilen Äthylenbisstearylamid, 0,4 Teilen 2,6-Ditert.-butyl-4-methylphenol und 31,5 Teilen (7,5 mol/mol Polyester) Butandiol-(1,4),

b) 200 Teile des Polyolgemisches,

c) 200 Teile des Polyolgemisches,

2. a) 307 Teile Diisocyanatodiphenylmethan,

b) 204,8 Teile Diisocyanatodiphenylmethan,

c) 163 Teile Diisocyanatodiphenylmethan,

3. a) 24 Teile Wasser (Theorie: 5,8 Teile),

b) 27 Teile Wasser (Theorie: 3,9 Teile),

c) 27 Teile Wasser (Theorie: 0,9 Teile).

Die Wellendrehzahl beträgt 300 $min^{-1}$. Aus dem Extruder tritt eine fast klare Schmelze aus. Schmelzindexmessungen ergeben für den IMI folgende Werte:

| Produkt | Messtemperatur (°C) | IMI (g/10 min) |
|---|---|---|
| a | 230 | 135 |
| b | 220 | 64 |
| c | 220 | 89 |

Alle 3 Produkte ergeben 25%ig sowohl in Dimethylformamid als auch in Dimethylformamid/Methyläthylketon (4:1) hochviskose, fast klare Lösungen.

*Beispiel 4*

In den Trichter der Schneckenmaschine werden kontinuierlich dosiert:

1. 375 Teile eines handelsüblichen, thermoplastischen Bisphenol-A-Polycarbonats,

2. 200 Teile einer Mischung aus 100 Teilen des im Beispiel 1 beschriebenen Polyesters mit einer Hydroxylzahl von 50 und 0,4 Teilen 2,6-Ditert.-butyl-4-methylphenol,

3. 136 Teile Diisocyanatodiphenylmethan.

In das 5. Extrudergehäuse werden

4. 33 Teile einer Mischung aus 15,8 Teilen Butandiol-(1,4) und 1,35 Teilen Wasser kontinuierlich eingespeist. Die Wellendrehzahl liegt bei 250 tr/min. Das Produkt ist milchigtrüb und lässt sich durch Spritzguss verarbeiten. Die an Doppelschulterstäben S 1 nach DIN 53 504 gemessene Zugfestigkeit beträgt 30,5 MPa, die Bruchdehnung 185%.

*Beispiel 5*

In den Schneckentrichter werden je Zeiteinheit dosiert:

1. 34 Teile eines thermoplastischen Pfropfcopolymerisats aus Butadien, Styrol und Acrylnitril,

2. 200 Teile des im Beispiel 4 beschriebenen, mit Ditert.-butylmethylphenol stabilisierten Polyesters, und

3. 346 Teile Diphenylmethandiisocyanat.

In das 2. Gehäuse werden

4. 88,6 Teile einer Mischung aus 42 Teilen Butandiol-(1,4) und 3,6 Teilen Wasser (Molverhältnis 7:3)

eindosiert.

Bei einer Wellendrehzahl von 300 $min^{-1}$ entsteht ein milchigtrübes, thermoplastisch verarbeitbares Produkt.

*Beispiel 6*

Es wird wie im Beispiel 5 beschrieben verfahren. In der Schneckenmaschine werden kontinuierlich je Zeiteinheit umgesetzt:

1. 43 Teile des Pfropfcopolymerisats,
2. 200 Teile des stabilisierten Polyesters,
3. 265 Teile Diphenylmethandiisocyanat,
4. 78 Teile der Mischung aus Butandiol-(1,4) und Wasser (= theoretisch 17% Überschuss).

Das molare Verhältnis der Kettenverlängerermischung zum Polyester liegt im Reaktionsprodukt bei 10,7:1. Die Messung des Schmelzindex bei 220°C bei sonst gleichen Bedingungen wie im Beispiel 1 ergibt einen IMI von 70 g/10 min.

*Beispiel 7*

Es werden kontinuierlich je Zeiteinheit in den Einspeisetrichter der Schneckenmaschine dosiert:

1. 200 Teile eines Gemisches aus 100 Teilen des im Beispiel 1 beschriebenen Polybutandioladipats, 0,5 Teilen eines aromatischen Carbodiimids, 17,1 Teilen Butandiol-(1,4) und 1,45 Teilen n-Octanol, und

2. a) 110 Teile Diisocyanatodiphenylmethan,
b) 136 Teile Diisocyanatodiphenylmethan,
c) 160 Teile Diisocyanatodiphenylmethan.

In das 5. Gehäuse der Schneckenmaschine werden

3. a) 27 Teile Wasser (theoretisch notwendig 0,65 Teile),
b) 45 Teile Wasser (theoretisch notwendig 2,5 Teile),
c) 13 Teile Wasser (theoretisch notwendig 4,2 Teile),

je Zeiteinheit eingespeist. Das Produkt wird bei einer Drehzahl von 300 $min^{-1}$ im Extruder hergestellt. Aus der Maschine tritt eine fast farblose, fast klare Schmelze aus, für die folgende Schmelzindizes (IMI) bestimmt werden:

| Produkt | Messtemperatur (°C) | IMI (g/10 min) |
|---|---|---|
| a | 200 | 95 |
| b | 225 | 290 |
| c | 225 | 145 |

Die 25%ige Lösung des Produktes a in Dimethylformamid/Methyläthylketon (3:2) hat bei 25°C eine Viskosität von 4500 mPa·s.

*Beispiel 8*

Es wird wie im Beispiel 7 beschrieben verfahren, jedoch enthält die Polyolkomponente 1 anstatt 1,45 Teile 2,3 Teile n-Octanol. In der Zeiteinheit werden folgende Produktmengen in die Schneckenmaschine dosiert:

1. 200 Teile der Polyolmischung,
2. a) 136 Teile Diphenylmethandiisocyanat,
b) 183 Teile Diphenylmethandiisocyanat,
3. a) 13 Teile Wasser (theoretisch 2,4 Teile),
b) 10 Teile Wasser (theoretisch 5,9 Teile).

Die fast klaren, fast farblosen Produkte haben
a) bei 200°C einen IMI von 90, und
b) bei 225°C einen IMI von 230 g/10 min,
das Produkt a 25%ig im im Beispiel 7 beschriebenen Lösungsmittelgemisch eine Viskosität von 9300 mPa·s bei 25°C. Produkt b hat nach DIN 53 504 eine Zugfestigkeit von 37 MPa bei einer Bruchdehnung von 410%. Die Shore-D-Härte beträgt 53.

*Beispiel 9*

In den Trichter der Schneckenmaschine werden

1. 200 Teile einer Mischung aus 100 Teilen des im Beispiel 1 beschriebenen Polyadipats mit einer OH-Zahl von 51 und einer Säurezahl von 0,7, 0,5 Teilen eines aromatischen Carbodiimids (®Stabaxol 1, Bayer AG), 1,2 Teilen Äthylenbisstearylamid, 0,4 Teilen, 2,6-Ditert.-butyl-4-methylphenol und 25 Teilen Butandiol-(1,4),

2. a) 97,2 Teile (einer Mischung aus 65 Teilen Toluylen-2,4-,
b) 122 Teile -diisocyanat und 35 Teilen Toluylen-2,6-diisocyanat),

und in das 5. Gehäuse der Schneckenmaschine

3. a) 5 Teile Wasser (theoretisch 0,9 Teile),
b) 6 Teile Wasser (theoretisch 3,4 Teile),

dosiert.

Bei einer Wellendrehzahl von 300 $min^{-1}$ tritt eine auch nach dem Erstarren klare Schmelze aus der Schneckenmaschine aus.

Produkt b hat bei 180°C einen IMI von 30 g/10 min.

*Beispiel 10*

In den Schneckentrichter werden kontinuierlich dosiert:

1. 600 Teile einer Mischung aus 100 Teilen Polybutandioladipat mit einer OH-Zahl von 48 und einer Säurezahl von 0,5, 38,3 Teilen Butandiol-(1,4) und 2,9 Teilen n-Octanol,
2. 578 Teile Diphenylmethan-4,4'-diisocyanat

In das 5. Schneckengehäuse werden gleichzeitig eingespeist:

a) 5,6 Teile Wasser (theoretisch: 4,9 Teile)
b) 28 Teile Wasser (theoretisch: 4,9 Teile)

Die Reaktion läuft im Extruder bei 300 tr/min ab.

Für den Schmelzindex der Produkte werden folgende Werte gemessen:

| Produkt | Messtemperatur (°C) | IMI (g/10 min) |
|---|---|---|
| a | 210 | 11 |
| b | 210 | 66 |

Als Lösungsviskosität werden für Produkt b 25%ig in Dimethylformamid/Methyläthylketon

(4:1) bei Raumtemperatur (25° C) 18000 mPa·s bestimmt.

*Beispiel 11*

In den Einspeisetrichter der Schneckenmaschine werden dosiert:

1. 230 Teile eines auf 60° C gehaltenen NCO-Präpolymers aus 70 Teilen Polybutandioladipat (OH-Zahl 51, Säurezahl 0,7) 0,8 Teilen Äthylenbisstearylamid, 0,8 Teilen n-Octanol und 26,4 Teilen Diisocyanatodiphenylmethan mit einem NCO-Gehalt von 5,9%
2. 7,4 Teile Butandiol-(1,4)
3. In das 5. Gehäuse werden gleichzeitig 50 Teile Wasser (theoretisch ca. 1,4 Teile) eingespeist.

Die Reaktion wird bei einer Drehzahl von 300 $min^{-1}$ und bei einem Gehäusetemperaturprofil wie im Beispiel 10 durchgeführt. Das Produkt hat einen IMI von 7 g/10 min bei 180° C.

*Beispiel 12*

In den Einspeisetrichter der Schneckenmaschine werden dosiert:

1. 500 Teile eines NCO-Präpolymers mit einem NCO-Gehalt von 9,6% aus 100 Teilen Polybutandioladipat mit einer Hydroxylzahl von 51 und einer Säurezahl von 0,6, 0,4 Teilen 2,6-Ditert.-butyl-4-methylphenol, 1,6 Teilen n-Octanol und 60,1 Teilen 4,4'-Diisocyanatodiphenylmethan
2. 48,8 Teile Butandiol-(1,4)

In das 5. Extrudergehäuser werden

3. a) 6 Teile Wasser
   b) 8 Teile Wasser
   c) 4 Teile Wasser
   d) 2 Teile Wasser
   e) 0,5 Teile Wasser (= theoretische Menge)

dosiert. Die Reaktion läuft bei einer Wellendrehzahl von 300 min ab. Die mittlere Verweilzeit zwischen Trichter und Düsenplatte beträgt ca. 1,5 min.

Die Produkte haben folgende Schmelz- und Lösungsviskositäten:

| Produkt | IMI bei 190°C (g/10 min) | Lösungsmittelviskositäten (mPa·s) [1] |
|---|---|---|
| a | 44 | 485 |
| b | 53 | 450 |
| c | 51 | 410 |
| d | 34 | 640 |
| e | 5 | 2300 |

[1] 25%ig in Dimethylformamid/Methyläthylketon (1:1), gemessen bei 25°C.

Die Schmelz- und Lösungsviskositäten zeigen, dass von einer gewissen Wassermenge aufwärts (ca. 4 Teile) die Molekulargewichte des Reaktionsprodukts sich praktisch nicht ändern, so dass ein Wasserüberschuss Dosierschwankungen bei den anderen Komponenten ausgleicht.

*Beispiel 13*

In den Trichter der Schneckenmaschine werden kontinuierlich eingespeist:

1. 420 Teile eines NCO-Präpolymers mit einem NCO-Gehalt von 12,9% aus 60 Teilen eines linearen Polypropylenglykols mit einer OH-Zahl von 56, 0,1 Teilen 2,6-Ditert.-butyl-4-methylphenol und 52,5 Teilen.Diisocyanatodiphenylmethan
2. 71,5 Teile Hexandiol-(1,6) und $5 \cdot 10^{-3}$ Teile Titantetrabutylat

In das 5. Gehäuse werden gleichzeitig dosiert:

3. 2,5 Teile Wasser (für gefundenen NCO-Gehalt wären theoretisch ca. 0,7 Teile notwendig).

Die Umsetzung erfolgt bei einer Wellendrehzahl von 300 $min^{-1}$.

Das Produkt ergibt 25%ig in Dimethylformamid/Methyläthylketon (4:1) eine klare Lösung mit einer Viskosität von 29000 mPa·s.

*Beispiel 14*

In den Einspeisetrichter der Schneckenmaschine werden 420 Teile eines NCO-Präpolymers mit 7,9% freien NCO-Gruppen aus 21,3 Teilen Diisocyanatodiphenylmethan und 48 Teilen Polyhexandioladipat mit einer Hydroxylzahl von 48 und einer Säurezahl von 0,7, das 15 ppm Titantetrabutylat enthält, dosiert. Gleichzeitig werden in das 5. Gehäuse 23 Teile Wasser (theoretisch erforderlich 7,1 Teile) eingespeist.

Bei einer Drehzahl von 300 $min^{-1}$ wird ein bei Raumtemperatur trübes Produkt erhalten, das bei 250° C einen IMI von 7 g/10 min hat.

*Beispiel 15*

In den Trichter der Schneckenmaschine werden kontinuierlich dosiert:

1. 324 Teile einer mit 30 ppm Zinnoctoat aktivierten Polyolmischung aus 75 Teilen eines Adipinsäure/Butandiol/Äthylenglykol-Mischpolyesters mit einer Hydroxylzahl von 55,8 und einer Säurezahl von 0,7, 25 Teilen eines Polybutandioladipats mit einer Hydroxylzahl von 53,2 und einer Säurezahl von 0,5, 1,2 Teilen Äthylenbisstearylamid und 0,05 Teilen 2,6-Ditert.-butyl-4-methylphenol sowie
2. 269 Teile Diisocyanatodiphenylmethan

In das 5. Gehäuse des Reaktionsextruders dosiert man

3. 76,5 Teile eines Gemisches aus 45 Teilen Butandiol-1,4, 1,0 Teilen Wasser (Molverhältnis Butandiol/Wasser = 9:1) und 1,2 Teilen Octnaol.

Über ein im letzten Viertel der Schneckenmaschine angebrachtes Entgasungsgehäuse kann das entstehende $CO_2$

a) bei 260 mbar (200 Torr)
b) gegen Atmosphärendruck und
c) gegen einen Überdruck von 5 bar

entweichen.

Bei einer Wellendrehzahl von 300 $min^{-1}$ tritt eine klare, blasenfreie Schmelze aus der Maschine aus. Der Schmelzindex (IMI) des Produktes bei 210° C beträgt:

a) 39 g/10 min
b) 72 g/10 min
c) 89 g/10 min.

Alle Produkte ergeben in einer Mischung aus Dimethylformamid/Methyläthylketon (3:2) klare, stabile Lösungen, die sich zur Herstellung transparenter Folien eignen und bei einem Feststoffgehalt von 25% folgende Viskositäten aufweisen:

a) 107500 mPa·s (25°C)
b) 6300 mPa·s
c) 2450 mPa·s.

Das Material eignet sich ebenfalls zur Spritzgussverarbeitung und liefert weitgehend transparente Formkörper mit folgenden mechanischen Eigenschaften:

| | a | b | c |
|---|---|---|---|
| Modul 100% (DIN 53504) | 16,5 | 16,0 | 14,4 |
| Modul 300% (DIN 53504) | 36,6 | 31,1 | 27,3 |
| Zugfestigkeit (MPa) (DIN 53504) | 52,4 | 47,8 | 44,7 |
| Bruchdehnung (%) | 383 | 431 | 436 |
| Grenzbiegespannung (MPa) (DIN 53452) | 5,7 | 6,3 | 6,4 |
| Kerbschlagzähigkeit bei −20°C (kJ/m²) (DIN 53453) | 8,4 | 13,8 | 15,6 |
| Shore Härte A/D (DIN 53505) | 97/48 | 97/47 | 97/47 |
| Stosselastizität (%) (DIN 53512) | 30 | 31 | 32 |
| Abrieb (mm³) (DIN 53516) | 27 | 39 | 49 |
| Schrumpf (normal/getempert) (%) | 2,4/3,4 | 2,4/3,4 | 1,9/2,9 |

## Patentansprüche

1. Verfahren zur kontinuierlichen Herstellung von Polyurethanharnstoffen durch, gegebenenfalls stufenweise, Umsetzung von

A) einem oder mehreren Polyisocyanaten,

B) einer oder mehreren Verbindungen mit im Mittel mindestens 1,8 zerewitinoffaktiven Wasserstoffatomen und einem Molekulargewicht zwischen 400 und 10000, und/oder

A') einem Isocyanatgruppen aufweisenden Vorpolymeren aus den Komponenten (A) und (B) mit

C) 0,07 bis 40 Gew.%, bezogen auf die Summe der zerewitinoffaktiven Verbindungen (B) + (C) + (D) an Wasser, sowie gegebenenfalls

D) weiteren ein oder mehrere zerewitinoffaktive Wasserstoffatome aufweisenden Verbindungen mit einem Molekulargewicht zwischen 32 und 400, und/oder

E) Monoisocyanaten,

wobei das Äquivalentverhältnis zwischen Komponente (B) und der Summe der Komponenten (C) und (D) zwischen 5:1 und 1:30 liegt, der molare Anteil der Komponente (C) mindestens 5% der Summe aus (C) und (D) ausmacht und das Äquivalentverhältnis zwischen Isocyanatgruppen und zerewitinoffaktiven Wasserstoffatomen einschliesslich Wasser insgesamt unter 1,1:1 liegt, in Schneckenmaschinen, dadurch gekennzeichnet, dass

a) die Umsetzung in einem mit Knetelementen bestückten Mehrwellenextruder mit selbstreinigender Schneckengeometrie stattfindet,

b) die Komponente (C) an einer Stelle in die Schneckenmaschine eindosiert wird, an welcher das Reaktionsgemisch eine Temperatur von 120-280°C aufweist,

c) Druck und Temperatur in den Einzugs- und Reaktionszonen der Schneckenmaschine so aufeinander abgestimmt werden, dass Komponente (C) als Gasphase vorliegt, und

d) die Temperatur in der Extrusionszone so eingestellt wird, dass das Extrudat einem Druck von mindestens 10 bar unterworfen ist.

2. Verfahren nach Anspruch 1, dadurch gekennzeichnet, dass die Reaktion zwischen Isocyanatgruppen und Wasser bei Temperaturen zwischen 170 und 270°C stattfindet.

3. Verfahren nach Ansprüchen 1 und 2, dadurch gekennzeichnet, dass die Schneckenmaschine mit einem oder mehreren Ausdampfgehäusen versehen ist.

4. Verfahren nach Anspruch 3, dadurch gekennzeichnet, dass das oder die Ausdampfgehäuse unter Überdruck stehen.

5. Verfahren nach Ansprüchen 1 bis 4, dadurch gekennzeichnet, dass das Wasser in Förderrichtung gesehen hinter den übrigen Ausgangsprodukten in die Schneckenmaschine eingespeist wird.

6. Verfahren nach Ansprüchen 1 bis 5, dadurch gekennzeichnet, dass Wasser im Überschuss eingesetzt wird.

7. Verfahren nach Ansprüchen 1 bis 6, dadurch gekennzeichnet, dass Wasser in Form von Kristallwasser eingesetzt wird.

8. Verfahren nach Ansprüchen 1 bis 7, dadurch gekennzeichnet, dass adsorptiv gebundenes Wasser eingesetzt wird.

9. Verfahren nach Ansprüchen 1 bis 8, dadurch gekennzeichnet, dass der Polyurethanharnstoff in Gegenwart eines oder mehrerer anderer Thermoplasten hergestellt wird.

## Claims

1. Process for the continuous preparation of polyurethane ureas by the optionally stepwise reaction of

(A) one or more polyisocyanates,

(B) one or more compounds having an average of at least 1.8 Zerewitinoff active hydrogen atoms and a molecular weight between 400 and 10,000, and/or

(A') an isocyanate group-containing prepolymer obtained from components (A) and (B), with

(C) water in a quantity of 0.07 to 40% by

weight, based on the sum of Zerewitinoff active compounds (B) + (C) + (D), and optionally

(D) other compounds with a molecular weight between 32 to 400 having one or more Zerewitinoff active hydrogen atoms, and/or

(E) mono-isocyanates,

in which the equivalent ratio of component (B) to the sum of components (C) and (D) is between 5:1 and 1:30, the molar proportion of component (C) amounts to at least 5% of the sum of (C) and (D) and the equivalent ratio of isocyanate groups to all the Zerewitinoff active hydrogen atoms, including water, is below 1.1:1, in screw extruders, characterised in that:

(a) the reaction takes place in a multi-shaft extruder with self-cleaning screws equipped with kneading elements,

(b) component (C) is fed in at a point in the screw extruder where the reaction mixture is at a temperature of 120 to 280° C,

(c) the pressure and the temperature in the intake and reaction zones of the extruder are so adjusted relative to each other that component (C) is in the gaseous phase, and

(d) the temperature in the extrusion zone is adjusted so that the extrudate is subjected to a pressure of at least 10 bar.

2. Process according to claim 1, characterised in that the reaction between isocyanate groups and water takes place at temperatures between 170 and 270° C.

3. Process according to claims 1 and 2, characterised in that the screw extruder is provided with one or more gas exhaust housings.

4. Process according to claim 3, characterised in that the one or more exhaust gas housings are under excess pressure.

5. Process according to claims 1 to 4, characterised in that the water is introduced into the screw extruder in a position behind the other starting meterials, viewed in the direction of transport.

6. Process according to claims 1 to 5, characterised in that water is used in excess.

7. Process according to claims 1 to 6, characterised in that water is used in the form of water of crystallization.

8. Process according to claims 1 to 7, characterised in that water is used in an adsorptively bound form.

9. Process according to claims 1 to 8, characterised in that the polyurethane urea is prepared in the presence of one or more other thermoplasts.

**Revendications**

1. Procédé de préparation en continu d'urées polyuréthanniques en faisant réagir, éventuellement par étapes:

(A) un ou plusieurs polyisocyanates,

(B) un ou plusieurs composés comportant, en moyenne, au moins 1,8 atome d'hydrogène actif de Zerewitinoff et ayant un poids moléculaire se situant entre 400 et 10 000, et /ou

(A') un prépolymère comportant des groupes isocyanate et constitué des composants (A) et (B), avec

(C) 0,07 à 40% en poids (calculé sur la somme des composés actifs de Zerewitinoff (B) + (C) + (D), d'eau, ainsi qu'éventuellement

(D) d'autres composés comportant un ou plusieurs atomes d'hydrogène actifs de Zerewitinoff et ayant un poids moléculaire se situant entre 32 et 400, et/ou

(E) des mono-isocyanates,

le rapport équivalent entre le composant (B) et la somme des composants (C) et (D) se situant entre 5:1 et 1:30, la fraction molaire du composant (C) représentant au moins 5% de la somme des composants (C) et (D) et le rapport équivalent entre les groupes isocyanate et les atomes d'hydrogène actifs de Zerewitinoff, y compris l'eau, étant, au total, inférieur à 1,1:1, dans des machines à vis sans fin, caractérisé en ce que:

(a) la réaction a lieu dans une extrudeuse à plusieurs arbres équipée d'éléments de malaxage et dont les vis sans fin ont une géométrie autonettoyante,

(b) on dose le composant (C) à un endroit de la machine à vis sans fin où le mélange réactionnel est à une température de 120-280° C,

(c) on détermine la pression et la température régnant dans les zones d'introduction et de réaction de la machine à vis sans fin l'une par rapport à l'autre de telle sorte que le composant (C) soit présent sous forme gazeuse, et

(d) on règle la température régnant dans la zone d'extrusion de telle sorte que le produit d'extrusion soit soumis à une pression d'au moins 10 bar.

2. Procédé suivant la revendication 1, caractérisé en ce que la réaction entre les groupes isocyanate et l'eau a lieu à des températures comprises entre 170 et 270° C.

3. Procédé suivant les revendications 1 et 2, caractérisé en ce que la machine à vis sans fin est pourvue d'un ou plusieurs logements d'évaporation.

4. Procédé suivant la revendication 3, caractérisé en ce que le ou les logements d'évaporation est ou sont sous une surpression.

5. Procédé suivant les revendications 1 à 4, caractérisé en ce que, vu dans le sens de circulation, l'eau est introduite dans la machine à vis sans fin derrière les autres produits de départ.

6. Procédé suivant les revendications 1 à 5, caractérisé en ce que l'eau est utilisée en excès.

7. Procédé suivant les revendications 1 à 6, caractérisé en ce que l'eau est utilisée sous forme d'eau de cristallisation.

8. Procédé suivant les revendications 1 à 7, caractérisé en ce qu'on utilise de l'eau fixée par adsorption.

9. Procédé suivant les revendications 1 à 8, caractérisé en ce qu'on prépare l'urée polyuréthannique en présence d'une ou plusieurs autres matières thermoplastiques.